# EUROPÄISCHE PATENTSCHRIFT

(11) **EP 4 277 043 B1**
(45) Veröffentlichungstag und Bekanntmachung des Hinweises auf die Patenterteilung: **02.12.2026**
(21) Anmeldenummer: 23200458.0
(22) Anmeldetag: 17.10.2018
(51) Int. Cl.: E05F 15/603, F16H 55/08

(54) **VERWENDUNG EINES STELLANTRIEBES IN VERBINDUNG MIT EINER KRAFTFAHRZEUG-SCHLIESSEINRICHTUNG IM INNERN EINES KRAFTFAHRZEUG-TÜRSCHLOSSES**
USE OF AN ACTUATOR IN CONJUNCTION WITH A MOTOR VEHICLE LOCKING DEVICE INSIDE A MOTOR VEHICLE DOOR LOCK
UTILISATION D'UN ACTIONNEUR EN LIAISON AVEC UN DISPOSITIF DE FERMETURE DE VEHICULE AUTOMOBILE A L'INTERIEUR D'UNE SERRURE DE PORTE DE VEHICULE AUTOMOBILE

(30) Priorität: 06.11.2017 DE 102017125819
(43) Veröffentlichungstag der Anmeldung: 15.11.2023
(62) Dokumentnummer(n) der früheren Anmeldung(en) nach Art. 76 EPÜ: 18796834.2 / 3 707 334
(73) Patentinhaber: Kiekert Aktiengesellschaft, 42579 Heiligenhaus (DE)
(72) Erfinder: Töpfer, Claus, 71063 Sindelfingen (DE); Schlabs, Winfried, 44869 Bochum (DE); Sonnenschein, Tim, 42329 Wuppertal (DE); Djedovic, Benjamin, 46049 Oberhausen (DE)
(74) Vertreter: Kiekert AG Patentabteilung

(56) Entgegenhaltungen:
- DE-A1- 102008 054 398
- DE-A1- 102009 046 209
- DE-A1- 102010 003 044
- DE-A1- 102015 204 328
- DE-U1- 202011 106 149

## Beschreibung

Die Erfindung betrifft die Verwendung eines Stellantriebs in Verbindung mit einer Kraftfahrzeug-Schließeinrichtung im Innern eines Kraftfahrzeug-Türschlosses.

Stellantriebe für kraftfahrzeugtechnische Anwendungen werden beispielsweise dazu genutzt, einen Außenspiegel zu verstellen, für eine Sitzverstellung zu sorgen, eine Scheinwerferverstellung vorzunehmen oder auch eine Einstellung oder Verstellung der Scheibenwischer. Außerdem lassen sich mithilfe solcher Stellantriebe grundsätzlich auch Klappenelemente beaufschlagen, wie beispielsweise eine Heckklappe, ein Heckdeckel, eine Kraftfahrzeugtür, eine Motorhaube oder dergleichen.

Neben diesen allgemeinen kraftfahrzeugtechnischen Anwendungen für Stellantriebe werden diese auch in Verbindung mit Kraftfahrzeug-Schließeinrichtungen genutzt und in der Praxis eingesetzt. Bei solchen Kraftfahrzeug-Schließeinrichtungen handelt es sich beispielsweise um einen Zuziehantrieb für eine Kraftfahrzeugtür oder eine Heckklappe. Außerdem lassen sich mit solchen Stellantrieben auch sogenannte Servoschlosshalter verfahren, um ebenfalls eine Kraftfahrzeugtür zuzuziehen. Daneben sind Anwendungen im Innern eines Kraftfahrzeugtürschlosses denkbar, beispielsweise derart, dass einzelne Schlosselemente beaufschlagt werden, beispielsweise ein Verriegelungselement oder Zentralverriegelungselement. Darüber hinaus lassen sich mithilfe des Stellantriebs unter anderem auch Tankklappen oder Ladedosen bei Elektromobilen verriegeln.

Die sämtlichen aus der Praxis bekannten Anwendungsgebiete für solche Stellantriebe erfordern oftmals einen kompakten Aufbau des Stellantriebes, weil die Einbauverhältnisse beengt sind. So wird im Rahmen der DE 10 2010 003 044 A1 eine mehrstufige Getriebeeinrichtung zur Verstellung einer Baueinheit in einem Kraftfahrzeug beschrieben. Bei der Baueinheit kann es sich um eine Sitzverstellung, eine Außenspiegelverstellung oder auch eine Scheinwerferverstellung sowie grundsätzlich auch einen Fensterheber oder andere Elemente im oder am Kraftfahrzeug handeln. Die bekannte mehrstufige Getriebeeinrichtung arbeitet mit einer ersten Getriebestufe bestehend aus einer Schnecke und einem mit der Schnecke kämmenden Stirn- bzw. Schneckenrad. Außerdem ist eine zweite Getriebestufe realisiert.

Die zweite Getriebestufe besteht aus einem Evoloidritzel und einem mit dem Evoloidritzel kämmenden Abtriebsrad. Das in die Schnecke eingreifende Stirn- bzw. Schneckenrad ist mit dem Evoloidritzel gekoppelt. Bei dem Evoloidritzel kann es sich um ein Kunststoffritzel handeln. Auf diese Weise wird eine kompaktbauende Getriebeeinrichtung zur Verfügung gestellt, mit der sich auch hohe Drehmomente übertragen lassen.

Der Stand der Technik nach der DE 10 2008 054 398 A1 lässt bereits einen Stellantrieb erkennen, der sowohl mit einem Evoloidritzel als auch einem Evoloid-Abtriebsrad ausgerüstet ist. In einer Ausführungsform kann mit einer Kunststoff-/Metallpaarung gearbeitet werden. Das lässt sich darauf zurückführen, dass es in diesem Zusammenhang um die Betätigung einer Bremse eines Kraftfahrzeuges geht und folglich hohe Kräfte verschleißfest übertragen werden müssen.

Im weiteren Stand der Technik nach der WO 2013/045104 A1 wird ein Spindelantrieb zur motorischen Verstellung eines Verstellelementes eines Kraftfahrzeuges beschrieben. In diesem Zusammenhang ist auch ein Planetengetriebe mit einem drehbaren Sonnenrad und koaxial dazu einem drehbaren Planetenradträger realisiert. Der Eingriff zwischen dem Sonnenrad und dem mindestens einem Planetenrad des Planetenradträgers ist als Evoloidverzahnung ausgestaltet. Auf diese Weise soll insgesamt der notwendige Bauraum in Richtung der Antriebslängsachse reduziert werden.
Bei der DE 10 2008 054 398 A1 geht es um einen Aktuator für die Betätigung einer Bremse eines Kraftfahrzeugs. In diesem Zusammenhang ist ein Getriebe vorgesehen, welches einen Elektromotor mit einem Abtrieb kraft- und/oder formschlüssig verbindet. In zumindest einer Stufe ist eine Evoloidverzahnung vorgesehen.
Ebenfalls ein Aktuator für eine Bremse eines Kraftfahrzeuges wird in der DE 10 2015 204 328 A1 beschrieben. Dabei ist ein Ritzelbauteil drehfest an einem freien Ende der Motorwelle montiert. Das Ritzelbauteil kämmt an seinem Umfang synchron mit zwei Zwischenrädern, die in einer gemeinsamen Montageebene arrangiert sind.
Durch die DE 20 2011 106 149 U1 ist ein Spindelantrieb zur motorischen Verstellung eines Verstellelementes eines Kraftfahrzeuges bekannt geworden. An dieser Stelle kommt unter anderem ein Drehzahluntersetzungsgetriebe zum Einsatz, welches ein Planetengetriebe aufweist.
Bei der DE 10 2009 046 209 A1 geht es um eine Stellvorrichtung für ein Stellorgan. Das Stellorgan ist dabei in einem Gasführungskanal einer Brennkraftmaschine angeordnet und kommt insbesondere im Zusammenhang mit einem Abgasturbolader und einer dortigen Bypassklappe zur Anwendung. Dabei ist in mindestens einer der Getriebestufen eine Evoloidverzahnung vorgesehen.

Der schließlich noch relevante Stand der Technik nach der EP 1 363 809 B1 betrifft einen Stellantrieb zur Kraftfahrzeug-Außenspiegelverstellung. Dazu ist ein Spiegeleinstellelement realisiert, das mit dem Elektromotor über den Antriebsstrang gekoppelt ist. Der Antriebsstrang weist ein Hauptzahnrad auf, welches im Antriebsstrang in der Nähe des Spiegeleinstellelementes vorgesehen ist. Das Hauptzahnrad ist über ein Ritzel mit einer Evoloidverzahnung verbunden.

Der Stand der Technik zeigt folglich ganz generell Stellantriebe für kraftfahrzeugtechnische Anwendungen, die in ihrem Antriebsstrang zumindest eine Evoloidverzahnung vorsehen. Die Evoloidverzahnung ist in diesem Zusammenhang mittig des Antriebstranges oder benachbart zum Stellelement realisiert, um am Ausgang des Antriebstranges mithilfe einer solchen Evoloidverzahnung in der Regel hoher Übersetzungsverhältnisse zur Verfügung zu stellen. Demgegenüber arbeitet der Antriebsstrang an seinem Eingang beim Stand der Technik typischerweise mit einem Schneckengetriebe. Hier setzt die Erfindung ein.

Der Erfindung liegt das technische Problem zugrunde, eine derartige Kraftfahrzeug-Schließeinrichtung zur Verfügung zu stellen, bei der im Vergleich zum bisherigen Stand der Technik eine nochmals kompaktere Bauform erreicht wird und insbesondere hohe Übersetzungsverhältnisse auch bei nur einer einzigen Getriebestufe zur Verfügung gestellt werden.
Zur Lösung dieser technischen Problemstellung ist die Verwendung eines Stellantriebes in Verbindung mit einer Kraftfahrzeug-Schließeinrichtung im Innern eines Kraftfahrzeug-Türschlosses nach Anspruch 1 vorgesehen.

Im Rahmen der Erfindung kann die Auslegung so gewählt und getroffen werden, dass der Elektromotor mithilfe seiner Antriebswelle über das darauf befindliche Evoloidritzel unmittelbar mit dem Evoloid-Abtriebsrad kämmt, welches seinerseits das Stellelement beaufschlagt. Das heißt, es lassen sich erfindungsgemäß einstufige Getriebeauslegungen unter Rückgriff auf die Evoloidverzahnung umsetzen. Denn die Evoloidverzahnung ist hierzu am Eingang des Antriebstranges vorgesehen. Am Ausgang des Antriebstranges arbeitet dieser auf das Stellelement, welches die gewünschten Stellbewegungen vollführt. Bei diesen Stellbewegungen kann es sich um sowohl rotatorische Stellbewegungen als auch translatorische Stellbewegungen und grundsätzlich auch Kombinationen handeln.

Außerdem liegt es im Rahmen der Erfindung, dass der Antriebsstrang zusätzlich zu der Evoloidverzahnung an seinem Eingang ein ergänzendes Getriebe aufweist oder aufweisen kann. Das ergänzende Getriebe kann mit einer oder mehreren weiteren Evoloidverzahnungen ausgerüstet sein. Auch kann das ergänzende Getriebe zusätzlich zu oder anstelle von Evoloidverzahnungen Getriebestufen mit Stirnradverzahnungen oder Schrägverzahnungen aufweisen.

Auf diese Weise wird generell eine besonders kompakte Ausführungsform des erfindungsgemäßen Stellantriebes zur Verfügung gestellt. Denn aufgrund der eingesetzten Evoloidverzahnung können eine oder mehrere Getriebestufen entfallen. Das führt ergänzend dazu, dass der erfindungsgemäße Stellantrieb über geringe Abmessungen verfügt oder verfügen kann. Außerdem kann hierdurch ein Gesamtgewicht des Stellantriebs verringert werden.

Hinzu kommt, dass eine solche Evoloidverzahnung über einen besseren Wirkungsgrad bei der Übertragung der Antriebsleistung von der Antriebswelle auf das Evoloid-Abtriebsrad als eine Geradverzahnung verfügt. Zudem weisen Evoloidverzahnungen eine bessere Akustik mit weniger Betriebsgeräuschen auf als Stirnräder mit Geradverzahnungen, so dass auch die Geräuschkulisse positiv beeinflusst wird. Ganz abgesehen davon sind solche Evoloidverzahnungen in der Regel nicht selbsthemmend ausgelegt, so dass sie bei Bedarf manuell bewegt werden und insbesondere manuell zurückgestellt werden können.

Das ist besonders für den Fall erforderlich und wünschenswert, dass der Stellantrieb ausgefallen ist und dass hiervon beaufschlagte Stellelement im Beispielfall manuell die gewünschte Stellbewegung ausführt oder ausführen muss. Da bei einer solchen manuellen Stellbewegung der Stellantrieb und folglich der Elektromotor inklusive Antriebsstrang mitbewegt werden müssen, spielen etwaige Selbsthemmungen eine besondere Rolle, die erfindungsgemäß gerade nicht beobachtet werden.
Erfindungsgemäß weist das Evoloidritzel drei Zähne auf. Außerdem ist der sogenannte Normalmodul des Evoloidritzels bei 0,5 und mehr angesiedelt. Unter dem Modul eines Zahnrades ist allgemein ein Maß für die Größe der Zähne zu verstehen. Im Regelfall bezeichnet der Modul anschaulich das Verhältnis zwischen Durchmesser des betreffenden Zahnrades und Zähnezahl. Bei einem Evoloidritzel ist der Normalmodul definiert als der Modul im Normalschnitt, das heißt in einer zu den Flankenlinien senkrechten Fläche der Verzahnung. Hier greift die Erfindung auf einen verhältnismäßig kleinen Normalmodul von wenigstens 0,5 zurück. Dadurch lassen sich hohe Drehmomente übertragen und werden keine übermäßig großen Kraftspitzen im Evoloidritzel beobachtet, so dass an dieser Stelle zur Realisierung erfindungsgemäß sogar auf Kunststoffe zurückgegriffen werden kann.

D. h., der Antriebsstrang ist zumindest teilweise aus Kunststoffzahnrädern zusammengesetzt. Gleiches gilt für das optional im Antriebsstrang vorgesehene Getriebe.. Bevorzugt ist das Evoloidritzel als Kunststoffritzel ausgebildet. **In** diesem Zusammenhang und auch ansonsten hat es sich generell bewährt, wenn das fragliche Evoloidritzel an einem Steckzapfen ausgebildet ist. Dadurch kann der Steckzapfen mit dem Evoloidritzel auf die Antriebswelle des Elektromotors aufgesteckt werden. Als Folge hiervon ist die Montage besonders einfach. Der Steckzapfen mit dem Evoloidritzel lässt sich dabei lösbar oder auch unlösbar mit der fraglichen Antriebswelle des Elektromotors koppeln. Zudem weist ein Kunststoffritzel oder ein Kunststoffzahnrad eine hohe Laufruhe auf, die höher ist als bei einem aus Metall bestehenden Ritzel oder Zahnrad von sonst identischen Abmessungen.

Wie üblich wird als Evoloidverzahnung allgemein eine schräge Evolventenverzahnung mit einem sehr hohen Steigungswinkel von zumindest 30° bezeichnet. Eine Evoloidverzahnung bzw. schräge Evolventenverzahnung dient zur Realisierung großer Übersetzungen in einer Stufe, wobei zusätzlich die Achsen der zugehörigen Zahnräder parallel ausgerichtet sind. Auf diese Weise kann erfindungsgemäß die Antriebswelle des Elektromotors parallel zu der des Stellelements verlaufend ausgerichtet werden. Außerdem gelingt hierdurch die Reduktion etwaiger Getriebestufen auf ein Minimum. Tatsächlich kommt die Erfindung grundsätzlich mit einer einzigen Getriebestufe, der Evoloidverzahnung, aus, wenngleich der Antriebsstrang - wie beschrieben - auch noch mit einem ergänzenden Getriebe ausgerüstet werden kann.

Im Folgenden wird die Erfindung anhand von zwei Ausführungsbeispiele darstellenden Zeichnungen ausführlicher erläutert. Es zeigen:
Fig. 1 : ein erstes Ausführungsbeispiel der erfindungsgemäßen Kraftfahrzeug-Schließeinrichtung mit Stellantrieb in einer schematischen Übersicht,
Fig. 2 : eine perspektivische Ansicht der realisierten Evoloidverzahnung und
Fig. 3 : ein nicht erfindungsgemäßes Ausführungsbeispiel des Stellantriebs.

In den Figuren ist ein Stellantrieb für kraftfahrzeugtechnische Anwendungen dargestellt. Bei den kraftfahrzeugtechnischen Anwendungen handelt es sich erfindungsgemäß um solche im Zusammenhang und für Kraftfahrzeug-Schließeinrichtung im Innern eines Kraftfahrzeug-Türschlosses, , wie dies zuvor im Detail erläutert wurde. Der Stellantrieb verfügt zu diesem Zweck in seinem grundsätzlichen Aufbau über einen Elektromotor 1 und ein Stellelement 5.

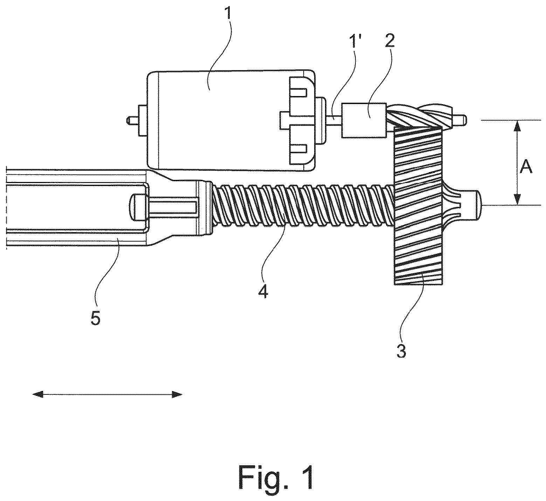

Anhand des Ausführungsbeispiels nach der Fig. 1 erkennt man, dass der Elektromotor 1 über einen Antriebsstrang 2, 3, 4 mittelbar oder unmittelbar das Stellelement 5 beaufschlagt. Das Ausführungsbeispiel nach Fig. 1 zeigt einen als Kleinstantrieb ausgeführten Stellantrieb. Im Ausführungsbeispiel wird das Stellelement 5 mithilfe des Antriebsstranges 2, 3, 4 unmittelbar beaufschlagt, weil in dem Antriebsstrang 2, 3, 4 lediglich eine Evoloidverzahnung 2, 3 zur Übersetzung der Drehbewegungen einer Antriebswelle 1' des Elektromotors 1 vorgesehen ist.

Die Evoloidverzahnung 2, 3 ist vorliegend zwischen einem Evoloidritzel 2 und einem Evoloid-Abtriebsrad 3 vorgesehen. An das Evoloid-Abtriebsrad 3 ist drehfest eine Gewindespindel 4 angeschlossen. Auf der Gewindespindel 4 wird eine Spindelmutter aufgenommen, die im Rahmen der Variante nach der Fig. 1 in das Stellelement 5 integriert ist bzw. einen Bestandteil des Stellelementes 5 darstellt. Auf diese Weise führen Drehungen der Gewindespindel 4 dazu, dass das Stellelement 5 die in der Fig. 1 angedeuteten Linearbewegungen bzw. translatorischen Bewegungen in Richtung des Doppelpfeils vollführen kann.

Man erkennt, dass die Antriebswelle 1' am Ausgang des Elektromotors 1 mit dem Evoloidritzel 2 ausgerüstet ist. Zu diesem Zweck ist das Evoloidritzel 2 als Steckzapfen ausgebildet. Der Steckzapfen bzw. das Evoloidritzel 2 ist dabei insgesamt auf die Antriebswelle 1' des Elektromotors 1 aufgesteckt und verfügt zu diesem Zweck über eine Hohlbohrung. Außerdem mag der Steckzapfen 2 zusätzlich auf der Antriebswelle 1' des Elektromotors 1 gesichert werden.

Man erkennt, dass die Evoloidverzahnung 2, 3 mit ihrem Evoloidritzel 2 und dem Evoloid-Abtriebsrad 3 über jeweils parallel zueinander laufende Drehachsen verfügt. Dadurch wird ein besonders kompakter Aufbau zur Verfügung gestellt. Die Drehachsen sind mit Abstand A zueinander orientiert. Außerdem kann hierdurch die Auslegung so getroffen werden, dass die Antriebswelle 1' des Elektromotors 1 und das Stellelement 5 insgesamt ebenfalls parallel zueinander verlaufen. Denn das Stellelement 5 bzw. die Spindelmutter bewegt sich in ihrer Längsrichtung entlang der Drehachse der Gewindespindel 4, welche mit der Drehachse des Evoloid-Abtriebsrads 3 zusammenfällt. Dementsprechend beobachtet man den gleichen Abstand A zwischen dem Stellelement 5 bzw. seiner Längsachse und der Antriebswelle 1' des Elementes 1.

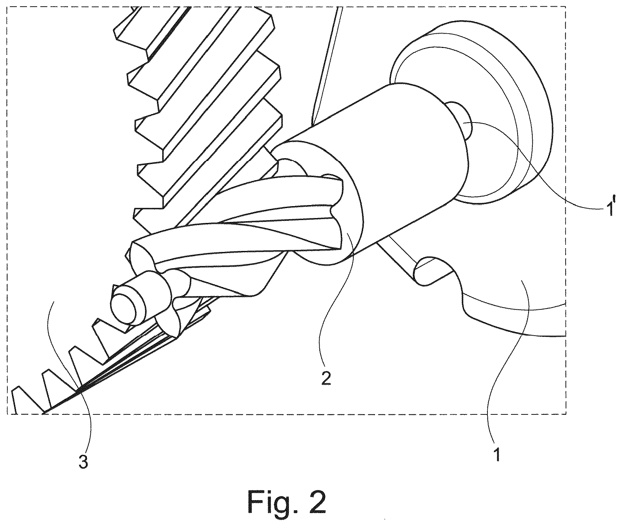

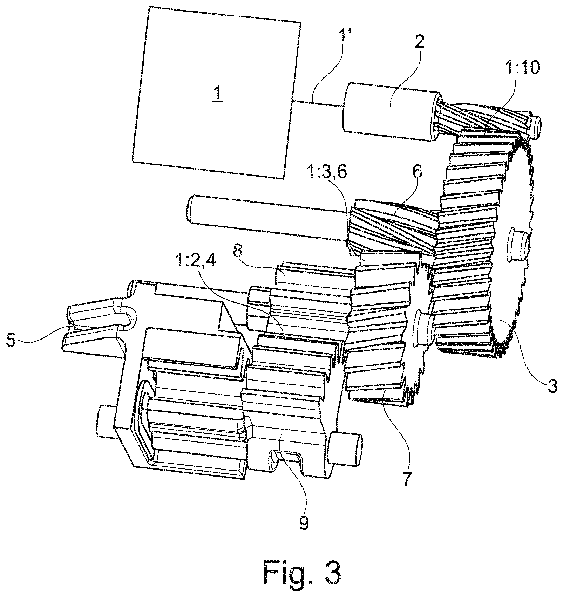

In der Fig. 2 sind Details der Evoloidverzahnung 2, 3 dargestellt. Man erkennt, dass das Evoloidritzel 2 nicht erfindungsgemäß mit insgesamt vier Zähnen ausgerüstet ist. Das Evoloidritzel 2 verfügt erfindunsggemäß über drei Zähne. Außerdem ist die Auslegung im Beispielfall so getroffen, dass die einzelnen Zähne des Evoloidritzels 2 ein Normalmodul von wenigstens 0,4 aufweisen. Demgegenüber weist das schräg verzahnte Evoloid-Abtriebsrad 3 nach dem Ausführungsbeispiel mit insgesamt vierzig Zähnen auf. Der Modul bzw. Normalmodul des Evoloid-Abtriebsrads 3 liegt ebenfalls bei wenigstens 0,4. Aufgrund der beschriebenen Zähnezahlen für einerseits das Evoloidritzel 2 und andererseits das Evoloid-Abtriebsrad 3 stellt sich im Ausführungsbeispiel auch insgesamt ein Übersetzungsverhältnis der auf diese Weise realisierten Evoloidverzahnung 2,3 von 10,0 bzw. 1 zu 10 ein, wie dies in der Fig. 3 an dieser Stelle eingetragen ist.

Das heißt, eine Umdrehung des Evoloid-Abtriebsrads 3 korrespondiert zu zehn Umdrehungen des Evoloidritzels 2. Generell können an dieser Stelle auch andere Übersetzungsverhältnisse realisiert werden. Im Regelfall weist die Evoloidverzahnung 2, 3 ein Übersetzungsverhältnis von mindestens 5,0 und vorzugsweise ein solches von 10,0 und mehr auf.

In dem Ausführungsbeispiel gemäß Fig. 1 wird eine Drehung einer Abtriebswelle des Elektromotors 1 über das mit der Gewindespindel 4 drehfest verbundene Evoloid-Abtriebsrad 3 direkt auf das Stellelement 5 übertragen. Alternative Ausführungen können zwischen Evoloid-Abtriebsrad 3 und Gewindespindel 4 eine oder mehrere Zwischenwellen vorsehen, welche auch als Evoloid-Getriebestufen ausgeführt sind oder auch konventionell als Stirnradstufen.

Das zweite Ausführungsbeispiel nach der Fig. 3 macht deutlich, dass der Antriebsstrang 2, 3, 4 entsprechend der Variante nach der Fig. 1 zusätzlich zu der Evoloidverzahnung 2, 3 an seinem Eingang mit einem ergänzenden Getriebe 6, 7; 8, 9 ausgerüstet werden kann. Das Getriebe 6, 7; 8, 9 setzt sich aus einer ersten Getriebestufe 6, 7 und einer zweiten Getriebestufe 8, 9 zusammen. In der Fig. 3 ist ein als Ladedosenaktuator ausgeführter Stellantrieb dargestellt (nicht erfindungsgemäß), der dazu vorgesehen ist, eine Ladedose eines Elektroautos zu verriegeln.

Bei der ersten Getriebestufe 6, 7 kommt erneut ein Evoloidritzel 6 zum Einsatz, welches mit einem schräg verzahnten Evoloid-Abtriebsrad 7 kämmt. An dieser Stelle wird ein Übersetzungsverhältnis von 3,6 bzw. 1 zu 3,6 beobachtet, wie dies in der Fig. 3 eingezeichnet ist. Das Evoloidritzel 6 der ersten Getriebestufe 6, 7 ist drehfest mit dem Evoloid-Abtriebsrad 3 der Evoloidverzahnung 2, 3 am Eingang des Antriebsstranges 2, 3, 4 bzw. 2, 3 gekoppelt.

An das Evoloid-Abtriebsrad 7 der ersten Getriebestufe 6, 7 ist drehfest ein Eingangszahnrad 8 der zweiten Getriebestufe 8, 9 angeschlossen, welches seinerseits mit einem Evoloid-Abtriebsrad 9 der zweiten Getriebestufe 8, 9 kämmt. Die beiden Zahnräder 8, 9 der zweiten Getriebestufe 8, 9 sind als geradverzahnte Stirnräder ausgebildet. Demgegenüber verfügen die Stirnräder 2, 3 der Evoloidverzahnung 2, 3 ebenso wie die Stirnräder 6, 7 der ersten Getriebestufe 6, 7 jeweils eingangsseitig über das bereits beschriebene Evoloidritzel 2 bzw. 6 und ausgangsseitig das schräg verzahnte Evoloid-Abtriebsrad 3 bzw. 7. In alternativen Ausgestaltungen können die erste Getriebestufe 6, 7 und die zweite Getriebestufe 8, 9 beide als Evoloid-Getriebestufen oder als Stirnrad-Getriebestufen ausgeführt sein.

Anhand des Ausführungsbeispiels nach der Fig. 3 erkennt man, dass die Evoloidverzahnung 2, 3 am Eingang des Antriebsstranges 2, 3, 4 bzw. 2, 3 in Verbindung mit dem nachgeschalteten Getriebe 6, 7; 8, 9 insgesamt ein Übersetzungsverhältnis von ca. 86,4 bzw. 1 zu 86,4 (10 x 3,6 x 2,4) zur Verfügung stellt, so dass sich große Übersetzungen bei zugleich kompaktem Aufbau realisieren lassen. Außerdem besteht der Antriebsstrang 2, 3, 4 bzw. 2, 3 und/ oder das Getriebe 6, 7; 8, 9 zumindest teilweise aus Kunststoffzahnrädern. Nach dem Ausführungsbeispiel sind wenigstens das Evoloidritzel 2 und das Evoloid-Abtriebsrad 3 aus Kunststoff gefertigt. Auch die weiteren Zahnräder 6, 7; 8, 9 des optionalen und nachgeschalteten Getriebes 6, 7; 8, 9 können aus Kunststoff gefertigt werden. Insgesamt wird bei der Variante nach der Fig. 3 das dort angedeutete Stellelement 5 mittelbar von dem Elektromotor 1 über den Antriebsstrang 2, 3, 4 beaufschlagt, nämlich unter Zwischenschaltung des Getriebes 6, 7; 8, 9. Außerdem fehlt bei dieser Variante die Gewindespindel 4, weil das Stellelement 5 hierbei mithilfe des Evoloid-Abtriebsrads 9 am Ausgang der zweiten Getriebestufe 8, 9 beaufschlagt wird.

## Patentansprüche

1. Verwendung eines Stellantriebes in Verbindung mit einer Kraftfahrzeug-Schließeinrichtung im Innern eines Kraftfahrzeug-Türschlosses,
die Kraftfahrzeug-Schließeinrichtung mit dem Stellantrieb mit Elektromotor (1), und mit einem vom Elektromotor (1) über einen Antriebsstrang (2, 3, 4) mittelbar oder unmittelbar beaufschlagten Stelleelement (5) ausgerüstet ist, wobei ferner in dem Antriebsstrang (2, 3, 4) zumindest eine Evoloidverzahnung (2, 3) vorgesehen ist, wobei weiter
eine Antriebswelle (1') des Elektromotors (1) mit einem drei Zähne aufweisenden Evoloidritzel (2) ausgerüstet ist, welches mit einem Evoloid-Abtriebsrad (3) unter unmittelbarer Realisierung der Evoloidverzahnung (2, 3) am Eingang des Antriebsstranges (2, 3, 4) kämmt, wobe
wahlweise der Antriebsstrang (2, 3, 4) zusätzlich zu der Evoloidverzahnung (2, 3) an seinem Eingang ein ergänzendes Getriebe (6, 7; 8, 9) aufweist, und wobei
der Antriebsstrang (2, 3, 4) und/oder das optionale Getriebe (6, 7; 8, 9) zumindest teilweise aus Kunststoffzahnrädern besteht.

2. Verwendung nach Anspruch 1, **dadurch gekennzeichnet, dass** das Evoloidritzel (2) an einem Steckzapfen ausgebildet ist.

3. Verwendung nach Anspruch 2, **dadurch gekennzeichnet, dass** der Steckzapfen bzw. das Evoloidritzel (2) auf die Antriebswelle (1') des Elektromotors (1) aufgesteckt ist.

4. Verwendung nach einem der vorhergehenden Ansprüche, **dadurch gekennzeichnet, dass** das Übersetzungsverhältnis der Evoloidverzahnung (2, 3) mindestens 5,0, vorzugsweise 10,0 und mehr, beträgt.

5. . Verwendung nach einem der vorhergehenden Ansprüche, **dadurch gekennzeichnet, dass** die Antriebswelle (1') des Elektromotors (1) und das Stellelement (2) parallel zueinander verlaufen.

6. Verwendung nach Anspruch 1, **dadurch gekennzeichnet, dass** das Getriebe (6, 7; 8, 9) mit einer oder mehreren weiteren Evoloidverzahnungen (6, 7) ausgerüstet ist.

## Claims

1. Use of an actuating drive in conjunction with a motor vehicle closing device inside a motor vehicle door lock, the motor vehicle closing device with the actuating drive being equipped with electric motor (1) and with an actuator element (5) that is acted upon indirectly or directly by the electric motor (1) via a drive train (2, 3, 4), wherein further at least one evoloid toothing (2, 3) is provided in the drive train (2, 3, 4), wherein further a driveshaft (1') of the electric motor (1) is equipped with an evoloid pinion (2) that has three teeth and meshes with an evoloid output gear (3), directly forming the evoloid toothing (2, 3) at the input of the drive train (2, 3, 4), and wherein the drive train (2, 3, 4) optionally has a supplementary gearing mechanism (6, 7; 8, 9) in addition to the evoloid toothing (2, 3) at its input, and wherein the drive train (2, 3, 4) and/or the optional gearing mechanism (6, 7; 8, 9) consists at least partially of plastic gear wheels.

2. Use according to Claim 1, **characterized in that** the evoloid pinion (2) is conformed on a plug-in pin.

3. Use according to Claim 2, **characterized in that** the plug-in pin or evoloid pinion (2) is mounted on the driveshaft (1') of the electric motor (1).

4. Use according to any one of the preceding claims, **characterized in that** the transmission ratio of the evoloid toothing (2, 3) is at least 5.0, preferably 10.0 and more.

5. Use according to any one of the preceding claims, **characterized in that** the driveshaft (1') of the electric motor (1) and the actuator element (2) extend parallel to each other.

6. Use according to Claim 1, **characterized in that** the gearing mechanism (6, 7; 8, 9) is equipped with one or more further evoloid toothings (6, 7).

## Revendications

1. Utilisation d'un mécanisme de commande en liaison avec un système de fermeture de véhicule automobile à l'intérieur d'une serrure de porte de véhicule automobile, sachant que le système de fermeture de véhicule automobile avec le mécanisme de commande est doté d'un moteur électrique (1) et d'un élément de positionnement (5) sollicité directement ou indirectement avec le moteur électrique (1) par le biais d'une chaîne cinématique (2, 3, 4), sachant en plus qu'au moins une denture évoloïde (2, 3) est prévue dans la chaîne cinématique (2, 3, 4), sachant en outre qu'un arbre d'entraînement (1') du moteur électrique (1) est doté d'un pignon évoloïde (2) comportant trois dents, lequel s'engrène avec un pignon de sortie évoloïde (3) en réalisant directement la denture évoloïde (2, 3) à l'entrée de la chaîne cinématique (2, 3, 4), sachant que selon nécessité, la chaîne cinématique (2, 3, 4) comporte à son entrée un mécanisme complémentaire (6, 7 ; 8, 9) en plus de la denture évoloïde (2, 3) et sachant que la chaîne cinématique (2, 3, 4) et/ou le mécanisme optionnel (6, 7 ; 8, 9) est composé au moins en partie d'engrenages en matière plastique.

2. Utilisation selon la revendication 1, **caractérisée en ce que** le pignon évoloïde (2) est constitué sur un pivot d'emboîtement.

3. Utilisation selon la revendication 2, **caractérisée en ce que** le pivot d'emboîtement ou le pignon évoloïde (2) est emboîté sur l'arbre d'entraînement (1') du moteur électrique (1).

4. Utilisation selon l'une quelconque des revendications précédentes, **caractérisée en ce que** le rapport de transmission de la denture évoloïde (2, 3) est d'au moins 5,0, de préférence de 10,0 et plus.

5. Utilisation selon l'une quelconque des revendications précédentes, **caractérisée en ce que** l'arbre d'entraînement (1') du moteur électrique (1) et l'élément de positionnement (2) passent parallèlement l'un par rapport à l'autre.

6. Utilisation selon la revendication 1, **caractérisée en ce que** le mécanisme (6, 7 ; 8, 9) est doté d'une ou plusieurs autres dentures évoloïdes (6, 7).
